# DEMANDE DE BREVET EUROPEEN

(11) **EP 1 705 464 A2**
(43) Date de publication de la demande: **27.09.2006**
(21) Numéro de dépôt: 06101595.4
(22) Date de dépôt: 13.02.2006
(51) Int. Cl.: G01F 15/06, G01F 15/075, G01P 5/07

(54) **Procédé et dispositif de comptage d'impulsions de sortie d'un interrupteur à lames souples**

(30) Priorité: 17.02.2005 FR 0550444
(71) Demandeur: Actaris SAS, 92100 Boulogne Billancourt (FR)
(72) Inventeur: Fontaine, José, 86380, Vendeuvre du Poitou (FR)
(74) Mandataire: Hervouet, Sylvie

(57) **Abrégé**

La présente invention concerne un procédé de comptage d'impulsions de sortie d'un interrupteur à lames souples (ILS) présentant un état d'ouverture ou un état de fermeture selon qu'il est soumis ou non à l'action d'un champ magnétique (G(t)) et délivrant des impulsions en relation à des changements d'état entre lesdits états d'ouverture et de fermeture. Selon l'invention, l'entrée de l'interrupteur est alimentée par une tension continue (Vp) pendant une première durée, et le signal de sortie est échantillonné pendant cette première durée pour obtenir N échantillons successifs correspondant à N instants d'échantillonnage successifs; parallèlement, entre deux instants d'échantillonnage successifs, on détecte tout changement d'état et on ne valide un échantillon obtenu à un instant d'échantillonnage donné que si aucun changement d'état n'a été détecté lors de la troisième étape entre l'instant d'échantillonnage donné et l'instant d'échantillonnage précédent immédiatement ; enfin, on valide un changement d'état de l'interrupteur, lorsque l'on a obtenu un nombre P prédéterminé et inférieur à N d'échantillons successifs identiques.

## Description

La présente invention concerne le comptage des impulsions de sortie délivrées par les interrupteurs à commande électromagnétique du type interrupteurs à lames souples (ou « ILS »), encore connus sous la dénomination d'ampoules Reed.

Une ampoule Reed est un composant formé de deux lames conductrices placées dans une enveloppe étanche remplie de gaz inerte, le composant comprenant en outre deux pattes de connexion électrique reliées aux lames et traversant l'enveloppe pour la connexion du composant à un circuit électrique d'utilisation. L'interrupteur est alors ouvert. La fermeture de l'interrupteur est obtenue par le rapprochement jusqu'au contact des deux lames, sous l'action d'un champ magnétique, typiquement obtenu par la présence d'un aimant à proximité des lames.

De tels interrupteurs ILS sont utilisés dans de nombreuses applications, et servent notamment à générer des impulsions de comptage. Dans le domaine des compteurs d'énergie par exemple, qu'il s'agisse de compteurs électriques ou de compteurs de gaz, ou encore de compteurs d'eau, les impulsions de comptage obtenues sont utilisées à des fins de tarification de l'utilisateur du réseau d'énergie, et transmises pour traitement à une interface utilisateur. L'aimant est placé sur un disque entraîné en rotation selon la consommation d'énergie par l'utilisateur, par exemple sur le disque correspondant aux litres sur un compteur de gaz. Le niveau du champ magnétique auquel est soumis l'interrupteur étant variable en fonction de la distance de cet interrupteur par rapport à l'aimant, une rotation complète du disque génère un cycle de fermeture/ouverture de l'interrupteur, se traduisant par la génération d'une impulsion de comptage.

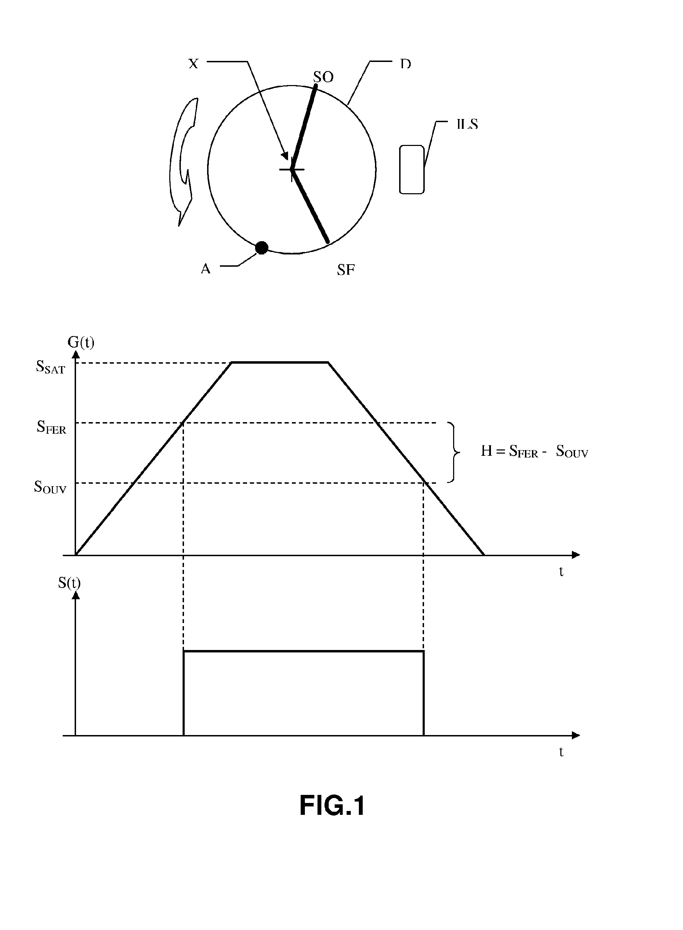

Pour illustrer le principe précédent, on a représenté schématiquement et à titre d'exemple sur la figure 1 un disque D en regard d'un interrupteur ILS. Le disque D tourne autour de son axe X dans le sens anti-horaire, et est doté d'un aimant A qui va venir agir sur l'état de l'interrupteur ILS en fonction de la rotation du disque. La courbe G(t) illustre la variation temporelle du niveau du champ magnétique reçu par l'interrupteur ILS lorsque le disque D tourne, et la courbe S(t) illustre la sortie ou impulsion de comptage correspondante de l'interrupteur ILS. Lorsque l'aimant A est dans la position représentée sur la figure 1, l'interrupteur est à l'état ouvert, les lames de l'interrupteur sont distantes l'une de l'autre. A mesure que l'aimant A se rapproche de l'interrupteur ILS, le champ magnétique G(t) reçu va augmenter jusqu'à atteindre un seuil de fermeture S_{FER} de l'interrupteur. A cet instant, les lames rentrent en contact, et le signal de sortie S(t) passe au niveau haut, correspondant à un état de fermeture de l'interrupteur. Lorsque l'aimant A est au plus proche de l'interrupteur, le champ reçu peut correspondre à un seuil de saturation S_{SAT} de l'interrupteur. Puis, l'aimant A va s'éloigner de l'interrupteur. En conséquence, le champ magnétique G(t) va diminuer jusqu'à atteindre un seuil d'ouverture S_{OUV} de l'interrupteur. A cet instant, les lames s'éloignent à nouveau l'une de l'autre, et le signal de sortie S(t) passe au niveau bas, correspondant à un état d'ouverture de l'interrupteur. On note qu'il existe une hystérésis, à savoir une différence notée H entre le seuil de fermeture S_{FER} et le seuil d'ouverture S_{OUV}. Le seuil d'ouverture S_{OUV} est dépendant du niveau de saturation S_{SAT} existant à la fermeture.

En théorie, une impulsion de comptage présentant l'allure du signal S(t) est donc obtenue à chaque tour de disque, permettant ainsi de déduire la consommation en énergie de l'utilisateur.

Bien que les ampoules Reed présentent des avantages en terme de coûts et de faible consommation, on s'est aperçu en pratique, dans l'application aux compteurs d'énergie, que les résultats en terme de comptage n'étaient pas toujours fiables, et notamment qu'il pouvait y avoir plus d'une impulsion de comptage sur un tour de disque, entraînant de ce fait un sur-comptage, pouvant conduire à une sur-tarification des utilisateurs par rapport à leur consommation réelle d'énergie.

De nombreuses études expérimentales menées par le Demandeur ont en particulier permis de déceler qu'un tel problème de sur-comptage pouvait apparaître lors de faibles consommations d'énergie, se traduisant par une vitesse très lente de rotation du disque portant l'aimant, par exemple inférieure à 0,1 tour/heure. En présence d'un aimant se déplaçant à faible vitesse, les analyses expérimentales ont permis de mettre en avant certains comportements non désirés de l'ampoule Reed décrits ci-après :

Un premier problème de comportement connu pour une ampoule Reed est le phénomène dit de rebond qui apparaît au moment de la fermeture de l'interrupteur. Ce phénomène est dû à une phase de rebond des lames au moment du contact et correspond généralement à un phénomène transitoire, amorti dans le temps au moment de la fermeture de l'interrupteur. Chaque rebond se traduit par une impulsion courte en sortie de l'interrupteur ILS. Tant que la durée des rebonds n'est pas trop importante, ce phénomène est maîtrisable car les impulsions parasites générées peuvent être ignorées par un circuit de filtrage analogique ou numérique adapté. Si la durée des rebonds devient trop importante, il est plus difficile d'éviter le sur-comptage d'impulsions. Or, les ampoules Reed livrées par les fournisseurs présentent des durées de rebonds très variables d'une ampoule à l'autre.

Par ailleurs, les ampoules Reed peuvent également, lorsqu'elles sont en limite de sensibilité, et lorsque le débit est faible au niveau du compteur, devenir instables et agir comme un oscillateur. L'instabilité peut avoir une origine électromécanique, intrinsèque à l'interrupteur. En effet, si le champ magnétique est tout juste suffisant, l'interrupteur va bien se fermer, mais le champ magnétique au niveau des lames va également légèrement diminuer lorsque les lames sont en contact. Si la diminution du champ magnétique local est trop importante, par exemple en raison d'une hystérésis trop faible, l'interrupteur va s'ouvrir à nouveau et ainsi de suite. L'interrupteur va entrer ainsi dans un état d'instabilité, se traduisant par la génération d'impulsions qui vont induire un sur-comptage. Certains interrupteurs ILS présentent de manière intrinsèque cette instabilité malgré une hystérésis élevée (mesurée par le constructeur) en raison de propriété mécanique de l'interrupteur. L'instabilité peut également avoir une origine électrostatique pour des tensions d'utilisation élevées (typiquement supérieurs à 12 Volts) et lorsque les lames de l'interrupteur sont trop rapprochées et/ou que ces lames ont une zone de recouvrement trop grande (attraction des lames).

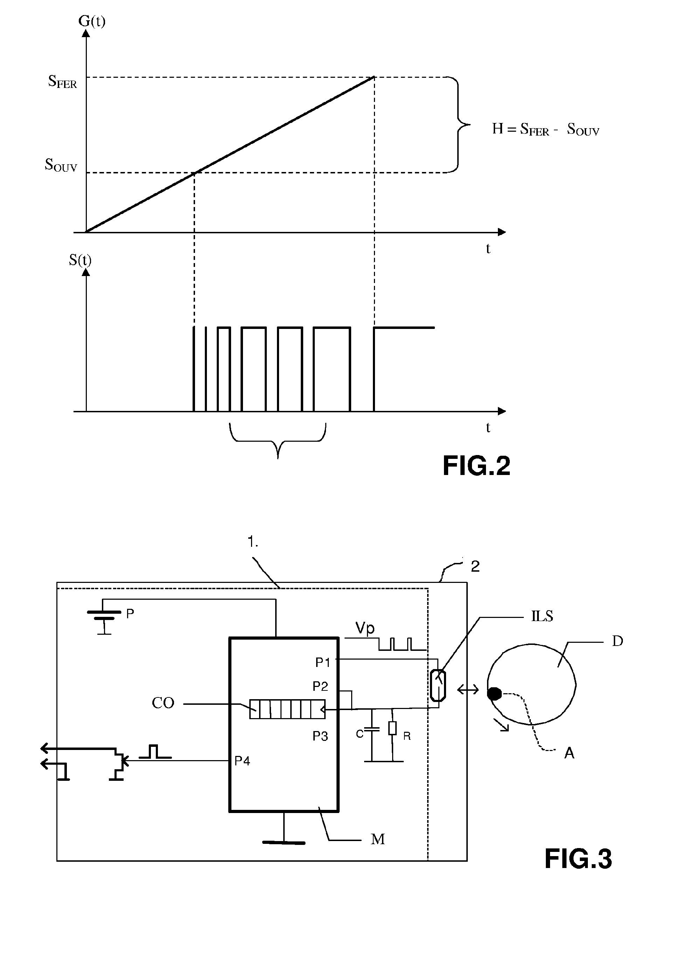

Un comportement d'instabilité (auto-oscillations) d'une ampoule Reed est illustré schématiquement sur la figure 2, en prenant les mêmes notations que dans le cas de la figure 1, et en ne s'intéressant qu'à la zone d'approche de l'aimant vers l'ampoule Reed. Ce cas est en effet le plus critique car, au moment de l'approche de l'aimant, l'interrupteur n'est pas préalablement saturé. Les impulsions parasites sont notées I_{P}. Certaines de ces impulsions I_{P} peuvent présenter une durée suffisamment importante (de l'ordre de la milliseconde) pour pouvoir être prises en compte lors du comptage. En outre, un nombre et une fréquence élevés d'impulsions parasites (pouvant être supérieure à la fréquence de résonance de l'ILS) peuvent également être à l'origine du sur-comptage. Bien que cela ne soit pas représenté sur la figure 2, un comportement similaire peut être observé lorsque l'aimant s'éloigne de l'ampoule Reed. Le phénomène d'instabilité est en outre d'autant plus important que l'ampoule Reed considérée présente une hystérésis faible.

Enfin, les phénomènes parasites précédents, observables sur des ampoules Reed seules, peuvent également être aggravés dans le temps par le vieillissement de l'interrupteur.

Différentes solutions visant à résoudre le problème de sur comptage ont déjà été proposées :

Une première solution consiste à effectuer, en amont, un tri sur les ampoules Reed avant montage dans les compteurs, soit chez le fabricant d'ampoule, soit chez l'intégrateur. Ce tri nécessite des tests et des bancs de tests spécifiques, et le taux de rejet est généralement important.

Une deuxième solution connue consiste à utiliser, en aval de l'ampoule Reed, par exemple au niveau de l'interface utilisateur qui reçoit les impulsions de comptage en sortie de l'ampoule Reed, des circuits de filtrage analogique, complétés par un filtrage numérique à faible période d'échantillonnage. Ces différents filtres ont cependant une efficacité limitée au regard de tous les évènements redoutés dus à l'ampoule Reed, notamment en cas de fonctionnement à bas débit du compteur. En outre, l'utilisation de tels filtres nécessite des ressources importantes de traitement, et impose le choix d'un microprocesseur performant au niveau de l'interface utilisateur. Enfin, ces solutions de filtrage sont très consommatrices d'énergie, ce qui est incompatible avec les exigences de sécurité d'utilisation.

La présente invention a pour but de pallier les inconvénients précédents en proposant un procédé et un dispositif de comptage d'impulsions fiabilisés.

Ce but est atteint selon l'invention qui a pour objet un procédé de comptage d'impulsions de sortie d'un interrupteur à lames souples présentant un état d'ouverture ou un état de fermeture selon qu'il est soumis ou non à l'action d'un champ magnétique et délivrant des impulsions en relation à des changements d'état entre lesdits états d'ouverture et de fermeture, caractérisé en ce qu'il comporte les étapes suivantes:
- une première étape d'alimentation d'une première borne de l'interrupteur à lames souples selon un premier mode d'alimentation par une tension continue pendant une première durée;
- une deuxième étape cféchantillonnage sur la première durée, lors de laquelle le signal prélevé sur la seconde borne de l'interrupteur à lames souples est échantillonné pour obtenir N échantillons successifs correspondant à N instants d'échantillonnage successifs ;
- une troisième étape de détection de perturbation, lors de laquelle on détecte, entre deux instants d'échantillonnage successifs, tout changement d'état ;
- une quatrième étape de validation des échantillons, lors de laquelle un échantillon obtenu à un instant d'échantillonnage donné n'est validé que si aucun changement d'état n'a été détecté lors de la troisième étape entre l'instant d'échantillonnage donné et l'instant d'échantillonnage précédent immédiatement ;
- une cinquième étape de validation d'un changement d'état de l'interrupteur, lors de laquelle un changement d'état de l'interrupteur est validé suite à l'obtention d'un nombre P prédéterminé et inférieur à N d'échantillons successifs identiques.

Dans une mise en oeuvre particulièrement avantageuse, le procédé selon l'invention comporte en outre une étape d'alimentation de ladite première borne de l'interrupteur à lames souples selon un second mode d'alimentation à basse consommation consistant à injecter une tension sur la première borne uniquement aux instants d'échantillonnage.

Avantageusement, l'alimentation est effectuée selon le second mode d'alimentation à basse consommation dès lors qu'aucun changement d'état n'a été détecté pendant une période de temps prédéfinie. Ceci permet d'obtenir un dispositif à faible consommation en énergie.

L'invention a également pour second objet un dispositif de comptage d'impulsions de sortie d'un interrupteur à lames souples présentant un état d'ouverture ou un état de fermeture selon qu'il est soumis ou non à l'action d'un champ magnétique et délivrant des impulsions en relation à des changements d'état entre lesdits états d'ouverture et de fermeture, caractérisé en ce qu'il comporte:
- des moyens d'alimentation d'une première borne de l'interrupteur à lames souples selon un premier mode d'alimentation par une tension continue pendant une première durée;
- des moyens d'échantillonnage sur la première durée, délivrant N échantillons successifs, correspondant à N instants d'échantillonnage successifs, du signal prélevé sur la seconde borne de l'interrupteur à lames souples;
- des moyens de détection de perturbation, recevant le signal prélevé et détectant, entre deux instants d'échantillonnage successifs, tout changement d'état ;
- des moyens de validation d'échantillons validant un échantillon obtenu à un instant d'échantillonnage donné si aucun changement d'état n'a été détecté par les moyens de détection de perturbation entre l'instant d'échantillonnage donné et l'instant d'échantillonnage précédent immédiatement ;
- des moyens de validation d'un changement d'état de l'interrupteur, validant un changement d'état de l'interrupteur suite à l'obtention d'un nombre P prédéterminé et inférieur à N d'échantillons successifs identiques.

La présente invention sera mieux comprise au vu de la description suivante faite en référence aux figures annexées dans lesquelles :
- la figure 1, déjà décrite, illustre le principe de génération d'une impulsion de comptage par un interrupteur à lames souples sous l'action d'un aimant placé sur un disque en rotation ;
- la figure 2, déjà décrite, illustre un phénomène d'instabilité de l'interrupteur à lames souples, générant des impulsions de comptage parasites (basses à très hautes fréquences);
- la figure 3 illustre, sous forme de synoptique simplifiée, un mode de réalisation possible d'un dispositif selon un mode de réalisation possible de l'invention.

L'application non limitative concernée par la représentation de la figure 3 est celle des compteurs d'énergie, pour lequel un interrupteur à lames souples ILS délivre des impulsions en relation à des changements d'état entre un état d'ouverture et un état de fermeture de l'interrupteur, selon que ce dernier est soumis ou non à l'action d'un champ magnétique. Ici, le champ magnétique est obtenu grâce à un aimant A porté par un disque rotatif D du compteur, dont la rotation dépend de la consommation en énergie d'un utilisateur.

Le dispositif conforme à l'invention constitue soit une interface autonome et déportée par rapport à l'interrupteur ILS, comme indiqué par les traits discontinus portant la référence 1, soit une interface intégrée 2 localisée au niveau du compteur, et comprenant l'interrupteur ILS.

Le dispositif tel que représenté est destiné à mettre en oeuvre les étapes conformes au procédé de comptage selon l'invention qui vont être à présent décrites :

Une première étape du procédé selon l'invention consiste à alimenter une première borne de l'interrupteur à lames souples ILS selon un premier mode d'alimentation par une tension continue Vp pendant une première durée. Les moyens permettant cette alimentation sont, sur l'exemple de la figure 3, constitués par un microcontrôleur M, alimenté en énergie par une pile P, et délivrant sur un port de sortie P1 la tension continue Vp. Sur la figure 3, on constate que l'allure de la tension Vp présente une première partie effectivement continue, et une seconde partie sous forme d'impulsions dont l'utilisation sera expliquée ultérieurement.

Pendant la durée de la première étape, une deuxième étape du procédé selon l'invention consiste à échantillonner le signal prélevé sur la seconde borne de l'interrupteur à lames souples ILS de façon à obtenir N échantillons successifs correspondant à N instants d'échantillonnage successifs. Dans l'exemple de la figure 3, le signal est prélevé sur la deuxième borne de l'interrupteur ILS via un filtre RC (filtrage CEM), et délivré sur un port d'entrée P2 du microcontrôleur M. L'échantillonnage et la mémorisation des échantillons obtenus sont réalisés par des moyens classiques non représentés intrinsèques au microcontrôleur. Chaque échantillon obtenu permet de savoir si l'interrupteur ILS, à l'instant d'échantillonnage, est fermé ou ouvert. En effet, le signal prélevé et délivré sur le port P2 correspond exactement au signal Vp lorsque l'interrupteur est fermé, alors que ce signal prélevé est nul si l'interrupteur est ouvert.

Selon l'invention, des échantillons successifs obtenus à l'étape précédente ne sont effectivement pris en compte dans la suite du traitement que si aucune perturbation n'a été détectée entre les deux instants successifs d'échantillonnage. Pour ce faire, selon une troisième étape dite de détection de perturbation, on détecte, entre deux instants d'échantillonnage successifs, tout changement d'état de l'interrupteur ILS, et on vaide, conformément à une quatrième étape, un échantillon obtenu à un instant d'échantillonnage donné si et seulement si aucun changement d'état n'a été détecté lors de la troisième étape entre l'instant d'échantillonnage donné et l'instant d'échantillonnage précédent immédiatement. Dans l'exemple de la figure 3, la troisième étape de détection de perturbation et la quatrième étape de validation des échantillons sont mises en oeuvre de la façon suivante : le signal prélevé en sortie de l'interrupteur ILS et délivré au port d'entrée P2 pour échantillonnage est également délivré à un compteur d'évènements CO, avantageusement interne au microcontrôleur M, via un deuxième port d'entrée P3 de ce microcontrôleur. Ce compteur d'évènement, initialisé après chaque échantillonnage, délivre au microcontrôleur M une valeur égale à zéro si aucun changement d'état n'est détecté entre deux instants d'échantillonnage, ou une valeur non nulle sinon. En fonction du résultat, un échantillon mémorisé au préalable sera pris ou non en compte.

Une cinquième étape conformément au procédé selon l'invention consiste à valider un changement d'état de l'interrupteur. Lors de cette étape, on détermine si on a obtenu un nombre P prédéterminé et inférieur à N d'échantillons successifs identiques. Dans l'exemple de la figure 3, toute cette étape est réalisée au sein du microcontrôleur M. A l'issue de cette étape, le microcontrôleur délivre, sur un port de sortie P4 une impulsion relative à tout changement d'état validé. Le comptage des impulsions sur le port de sortie P4 est représentatif de la consommation effective de l'utilisateur puisque toute impulsion parasite issue de l'interrupteur ILS, que la cause soit intrinsèque à l'interrupteur, ou externe à celui-ci (vibrations...), a été éliminée.

Dans un mode de réalisation tout à fait avantageux du procédé selon l'invention, le procédé comporte également une étape d'alimentation de l'interrupteur à lames souples ILS selon un second mode d'alimentation à basse consommation. Ce second mode d'alimentation consiste à injecter une tension sur la première borne uniquement aux instants d'échantillonnage. Ceci est représenté au niveau de la figure 3 où l'on peut voir que la tension Vp comporte une deuxième partie sous forme d'impulsions.

Le basculement du premier mode d'alimentation vers le second mode d'alimentation à basse consommation est déclenché dès lors qu'aucun changement d'état n'a été détecté pendant une période de temps prédéfinie.

De même, on revient au premier mode d'alimentation dès lors qu'un changement d'état est détecté entre deux échantillons successifs.

On peut par ailleurs obtenir une diminution encore plus importante de la consommation d'énergie en prévoyant que le microcontrôleur se mette en mode dit de veille entre deux instants d'échantillonnage, et ce, que l'on soit dans le premier mode d'alimentation (tension Vp continue) ou dans le second mode d'alimentation. On prévoit alors que, dans ce mode de veille, le compteur d'évènement soit en fonctionnement.

Le dispositif selon l'invention, installé sur un compteur d'énergie compteur, transmet à l'utilisateur des informations fiables issues de l'ampoule Reed malgré les imperfections de cette technologie à bas débit, à savoir:
- durée de rebonds plus longue ;
- auto-oscillation en limite de sensibilité ;
- susceptibilité aux perturbations externes en limite de sensibilité à la fermeture pouvant d'induire des pulses parasite ;
- évolution de ces imperfections dans le temps en fonction du vieillissement de l'interrupteur.

En outre, ce dispositif permet d'utiliser n'importe quelle ampoule Reed, sans tri préalable. Le traitement peu complexe permet d'utiliser un simple microcontrôleur à faible consommation.

Enfin, le dispositif est rapide à traiter l'information issue de l'ampoule Reed (temps de traitement inférieur à 20µS), et dans la mise en oeuvre permettant un basculement vers un second mode d'alimentation, présente une très faible consommation moyenne, et ne dépend plus que de la consommation du microcontrôleur en mode de veille. Selon le choix de ce microcontrôleur, la consommation peut être inférieure à 3µA.

## Revendications

1. Procédé de comptage d'impulsions de sortie d'un interrupteur à lames souples (ILS) présentant un état d'ouverture ou un état de fermeture selon qu'il est soumis ou non à l'action d'un champ magnétique (G(t)) et délivrant des impulsions en relation à des changements d'état entre lesdits états d'ouverture et de fermeture, **caractérisé en ce qu'**il comporte les étapes suivantes:
- une première étape d'alimentation d'une première borne de l'interrupteur à lames souples (ILS) selon un premier mode d'alimentation par une tension continue (Vp) pendant une première durée;
- une deuxième étape d'échantillonnage sur la première durée, lors de laquelle le signal prélevé sur la seconde borne de l'interrupteur à lames souples (ILS) est échantillonné pour obtenir N échantillons successifs correspondant à N instants d'échantillonnage successifs ;
- une troisième étape de détection de perturbation, lors de laquelle on détecte, entre deux instants d'échantillonnage successifs, tout changement d'état ;
- une quatrième étape de validation des échantillons, lors de laquelle un échantillon obtenu à un instant d'échantillonnage donné n'est validé que si aucun changement d'état n'a été détecté lors de la toisième étape entre l'instant d'échantillonnage donné et l'instant d'échantillonnage précédent immédiatement ;
- une cinquième étape de validation d'un changement d'état de l'interrupteur, lors de laquelle un changement d'état de l'interrupteur est validé suite à l'obtention d'un nombre P prédéterminé et inférieur à N d'échantillons successifs identiques.

2. Procédé selon la revendication 1, **caractérisé en ce qu'**il comporte en outre une étape d'alimentation de ladite première borne de l'interrupteur à lames souples (ILS) selon un second mode d'alimentation à basse consommation consistant à injecter une tension sur la première borne uniquement aux instants d'échantillonnage.

3. Procédé selon la revendication 2, **caractérisé en ce que** l'alimentation est effectuée selon le second mode d'alimentation à basse consommation dès lors qu'aucun changement d'état n'a été détecté pendant une période de temps prédéfinie.

4. Dispositif de comptage d'impulsions de sortie d'un interrupteur à lames souples (ILS) présentant un état d'ouverture ou un état de fermeture selon qu'il est soumis ou non à l'action d'un champ magnétique (G(t)) et délivrant des impulsions en relation à des changements d'état entre lesdits états d'ouverture et de fermeture, **caractérisé en ce qu'**il comporte:
- des moyens (M, P, P1) d'alimentation d'une première borne de l'interrupteur à lames souples (ILS) selon un premier mode d'alimentation par une tension continue (Vp) pendant une première durée;
- des moyens (R, M) d'échantillonnage sur la première durée, délivrant N échantillons successifs, correspondant à N instants d'échantillonnage successifs, du signal prélevé sur la seconde borne de l'interrupteur à lames souples (ILS);
- des moyens (CO) de détection de perturbation, recevant le signal prélevé et détectant, entre deux instants d'échantillonnage successifs, tout changement d'état ;
- des moyens (M, CO) de validation d'échantillons validant un échantillon obtenu à un instant d'échantillonnage donné si aucun changement d'état n'a été détecté par les moyens de détection de perturbation entre l'instant d'échantillonnage donné et l'instant d'échantillonnage précédent immédiatement ;
- des moyens (M) de validation d'un changement d'état de l'interrupteur, validant un changement d'état de l'interrupteur suite à l'obtention d'un nombre P prédéterminé et inférieur à N d'échantillons successifs identiques.

5. Dispositif selon la revendication 4, **caractérisé en ce qu'**il comporte un microcontrôleur (M) constituant une partie des moyens d'alimentation, les moyens d'échantillonnage, les moyens de validation d'échantillon et les moyens de validation des changements d'état.

6. Dispositif selon l'une quelconque des revendications 4 et 5, **caractérisé en ce que** les moyens de détection de perturbation comprennent un compteur d'évènements (CO) comptant les changements d'états de l'interrupteur entre deux instants d'échantillonnage successifs, et réinitialisé à chaque instant d'échantillonnage.

7. Dispositif selon la revendication 6, prise en combinaison avec la revendication 5, **caractérisé en ce que** ledit compteur d'évènement (CO) est un compteur du microcontrôleur (M).

8. Dispositif selon l'une quelconque des revendications 4 à 7, **caractérisé en ce que** les moyens d'alimentation comprennent une pile.

9. Dispositif selon l'une quelconque des revendications 4 à 8, **caractérisé en ce qu'**il délivre un comptage d'impulsions de sortie d'un interrupteur à lames souples équipant un compteur d'énergie.
